# EUROPÄISCHE PATENTSCHRIFT

(11) **EP 1 007 264 B1**
(45) Veröffentlichungstag und Bekanntmachung des Hinweises auf die Patenterteilung: **11.06.2003**
(21) Anmeldenummer: 98945237.0
(22) Anmeldetag: 13.08.1998
(51) Int. Cl.: B23K 9/28

(54) **STROMDÜSE**
FLOW NOZZLE
BUSE A COURANT

(30) Priorität: 30.08.1997 DE 19737934
(43) Veröffentlichungstag der Anmeldung: 14.06.2000
(73) Patentinhaber: Alexander Binzel Schweisstechnik GmbH & Co. KG, 35418 Buseck (DE)
(72) Erfinder: SATTLER, Richard, D-50858 Köln (DE)
(74) Vertreter: Müller, Eckhard, Dr.
(86) Internationale Anmeldenummer: EP9805138
(87) Internationale Veröffentlichungsnummer: WO99011417

(56) Entgegenhaltungen:
- EP-A- 0 041 165
- EP-A- 0 399 334
- GB-A- 1 359 875
- PATENT ABSTRACTS OF JAPAN vol. 096, no. 007, 31. Juli 1996 & JP 08 081723 A (MITANI SHINDO KK;YAMAHA METANIKUSU KK), 26. März 1996
- WECK, MANFRED: "Werkzeugmaschinen" 1980 , VDI-VERLAG GMBH , DÜSSELDORF XP002083612 1 siehe Seite 113 - Seite 115

## Beschreibung

Die Erfindung betrifft ein Herstellungsverfahren für eine Stromdüse für Schweiß- und Schneidbrenner mit einer oder mehreren Innenöffnungen zur Führung und Kontaktierung eines oder mehrerer Schweißdrähte.

Aus der EP 41 165 A1 ist ein Schutzgasschweißbrenner bekannt mit einer derartigen Stromdüse, welche dort Kontaktrohr genannt ist. Dieses Bauteil ist an der Spitze des Schutzgasschweißbrenners befestigt und führt den Schweißdraht an die Stelle, an welcher der Lichtbogen beginnt. Gleichzeitig wird der relativ hohe Schweißstrom über die Stromdüse dem Schweißdraht zugeführt. Die Stromdüse ist daher infolge des Stromflusses und der thermischen Beanspruchung hohen Belastungen ausgesetzt, so daß zu ihrer Herstellung bisher gezogenes Kupfermaterial eingesetzt wurde, wobei als Legierung u.a. Elektrolyt-Kupfer und Kupfer-chrom-Zirkonium als hohles Halbzeugmaterial zum Einsatz kommen. Die Fertigungsmittel bzw. -einrichtungen sowie das Herstellungsverfahren selbst für diese gezogenen Materialien sind sehr aufwendig, so daß es nur wenige Anbieter auf dem Markt gibt, was sich in entsprechenden Materialkosten widerspiegelt. Ein weiterer Nachteil ist, daß für jeden speziellen Nenndurchmesser und für jedes Toleranzfeld jeweils Sonderanfertigungen erforderlich sind. Dies ist insbesondere nachteilig bei geringen Stückzahlen. Ein wesentlicher Nachteil von gezogenem Material ist vor allem die Veränderung der Werkstoffeigenschaften infolge Wärmebehandlung und Umformung. Durch die Gefügeänderung infolge der Wärmebehandlung und der Umformprozesse werden die Oberflächen und Verschleißeigenschaften der Innenöffnung negativ beeinflußt.

Aus der GB 1 359 875 A ist eine Stromdüse für Schweiß- oder Schneidbrenner mit einer oder mehreren Innenöffnungen zur Führung und Kontaktierung eines Schweißdrahtes bekannt, wobei die Innenöffnung in stabförmigem Vormaterial hergestellt ist. Dabei werden die Stromdüsen pulvermetallurgisch hergestellt.

Aus der EP 399 334 A sind des weiteren Stromdüsen bekannt, welche durch Schmieden hergestellt werden.

Hiervon ausgehend liegt der vorliegenden Erfindung die Aufgabe zugrunde, ein Verfahren zum kostengünstigen Herstellen von Stromdüsen anzugeben.

Diese Aufgabe wird erfindungsgemäß gelöst durch ein Verfahren zur Herstellung einer Stromdüse, bei der die wenigstens eine Innenöffnung durch Tiefbohren im Vormaterial hergestellt ist. Ausführungen der Erfindung sind Gegenstände von Unteransprüchen.

Das Tiefbohren ist charakterisiert durch den Einsatz von Werkzeugen, die es ermöglichen, Schmier- und Bohrflüssigkeit bis in die Bohrspitze zu führen und das Abführen der Späne zu erzwingen. Beim Tiefbohren wird zudem mit einer hohen Bohrgeschwindigkeit gearbeitet, d.h. es werden kleine Späneabmessungen erzeugt, die dank stetiger Spanabfuhr das kontinuierliche Weiterbohren zulassen.

Die Besonderheit dieses Verfahrens ist also die Druckspülung, bei der die Schmier- und Bohrflüssigkeit längs des Bohrwerkzeuges - innerhalb einer vorgegebenen Nut - nach vorne geführt und die entstehenden kleinen Bohrspäne nach hinten abgeführt werden. Die Späne sind so klein, daß sie längs dieser vorgegebenen Nut entlang fließen können. In Verbindung mit speziell entwickelten Werkzeugen lassen sich durch das Tiefbohren Genauigkeiten im Bereich von IT 6 bis IT 9 in Abhängigkeit vom Werkstoff in einem Arbeitsgang ohne Nachbehandlung erzielen.

Durch die Erfindung wird erreicht, daß im Vergleich zum Stand der Technik wesentlich günstigeres Material eingekauft werden kann. Auch die Werkstoffauswahl ist in der Legierungsbreite quasi unendlich, so daß die Stromdüsen insgesamt kostengünstiger herstellbar sind. Dadurch, daß das erfindungsgemäße Herstellverfahren unabhängig von der Ziehfähigkeit des Werkstoffes ist, und damit eine größere Bandbreite an Werkstoffen eingesetzt werden kann als dies bisher möglich war, können auch ganz spezielle Anforderungen an das Material stärker berücksichtigt werden. So kann bspw. nicht oder nur schwer ziehfähiges Material verwendet werden oder auch Material, welches nicht oder nur schwer als Hohlprofil (Düsenrohr) herstellbar ist. Als Vormaterial kann sowohl Vollmaterial als auch Rohrmaterial zum Einsatz kommen.

Beispielsweise ist es nunmehr möglich, Legierungen mit einem größeren Freiheitsgrad bezüglich der Mikrostruktur, der Wärmebehandlung, der Umformungsvorgeschichte oder der Materialvorgeschichte einzusetzen. So kann ein Material gewählt werden, daß bezüglich der Verschleißfestigkeit und der Stromübertragung optimal ist. Durch die Erfindung können jetzt Materialien oder Halbzeuge eingesetzt werden, die mit dem bisherigen Herstellverfahren (Ziehverfahren) nicht bearbeitbar waren. Die Legierungen, die erfindungsgemäß jetzt zur Verfügung stehen, müssen im Gegensatz zum Stand der Technik nicht mehr in dieser Halbzeugform ziehfähig sein. So können jetzt Legierungen für Stromdüsen verwendet werden, die bisher für diesen Einsatzzweck nicht geeignet waren.

Durch das Tiefbohren werden auch die Eigenschaften des Halbzeugs nicht wesentlich beeinflußt, so daß diese Eigenschaften berechenbar oder vorherbestimmbar sind bzw. bleiben. Ein weiterer Vorteil ist die in einem Arbeitsschritt erreichte Oberflächengüte und die verbesserte Toleranz. Diese verbesserte Toleranz bewirkt, daß beim Schweißen über den gesamten Bereich der Stromdüse ein definierter Stromübergang vorhanden ist, und daß eine sehr viel bessere mechanische Führung erreicht wird, welche wiederum zu einem geringeren elektrischen, thermischen und schließlich mechanischen Verschleiß führt.

Als wesentlicher Vorteil bleibt insbesondere die günstigere Herstellbarkeit, da nunmehr nicht gezogenes Halbmaterial Verwendung findet, sondern schlichte Metallstangen als Vormaterial reichen, die dann durch Tiefbohren mit der oder den notwendigen öffnungen versehen werden.

Die Herstellung einer solchen Stromdüse erfolgt bevorzugt dadurch, daß man ein stab- oder stangenförmiges Material einer gewünschten Legierung und eines gewünschten Außendurchmessers in eine an sich bekannte Tiefbohrmaschine einspannt und dann aus dem Vormaterial durch Tiefbohren die eine oder die mehreren Innenöffnungen erzeugt. Durch das Tiefbohren wird gleichzeitig eine Innenfläche von hoher Genauigkeit erzeugt, deren Reibungskoeffizient gegenüber dem Schweißdraht absolut genau vorhersagbar ist und keinen Schwankungen unterliegt.

Weitere Vorteile und Anwendungsmöglichkeiten der vorliegenden Erfindung ergeben sich aus der nachfolgenden Beschreibung eines Ausführungsbeispiels anhand der Zeichnung.

Es zeigen:
- Figur 1: eine mittels des erfindungsgemäßer Verfahrens hergestellte Stromdüse und
- Figur 2: eine Tiefbohrmaschine.

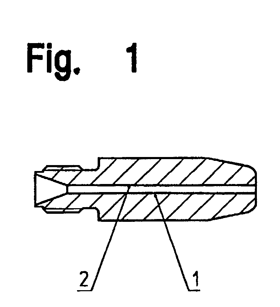

Die Stromdüse 1 gemäß Figur 1 ist, wie in der Regel üblich, zylinderförmig ausgestaltet, wobei die Spitze etwas konisch zulaufend ausgeführt sein kann. Im hinteren Bereich ist ein Gewinde vorgesehen, mit der die Stromdüse im Schweiß- oder Schneidbrenner eingepaßt wird. Die Stromdüse hat in dieser Ausführungsform eine durchgehende Innenöffnung 2, die an ihrer hinteren Seite eine Anfasung aufweist, damit der Schweißdraht besser einlaufen kann. Solche Schweißdüsen sind von der Form her Stand der Technik.

Neu ist nun, daß die Innenöffnung 2 mittels Tiefbohren aus einem aus Vollmaterial oder auch aus Rohrmaterial bestehenden Halbzeug erzeugt wurde. Dies erlaubt gegenüber dem früheren Ziehen von Rohren oder Teilen, die schon hohl geformt waren, eine wesentlich größere Materialauswahl.

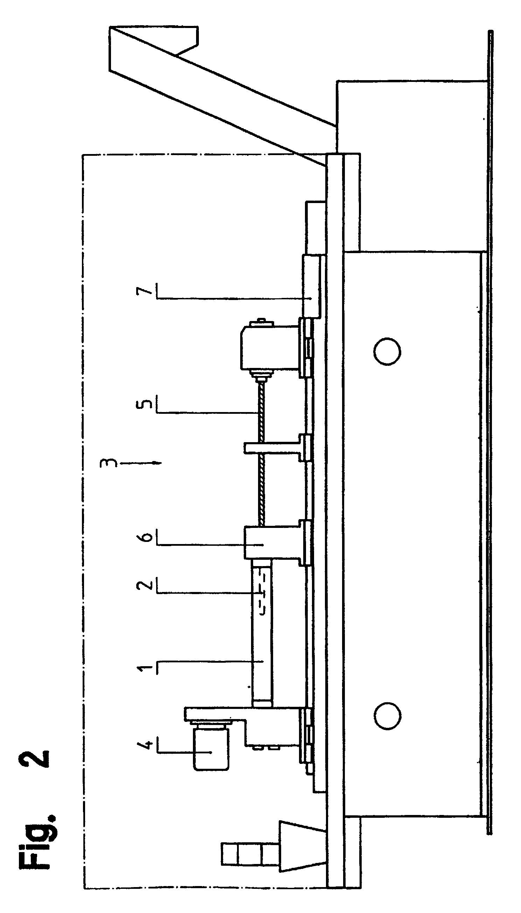

Figur 2 zeigt schematisch eine Tiefbohrmaschine 3, deren wesentliche Bestandteile der Antrieb 4, der Bohrer 5, die Einspanneinrichtung 6 sowie der Vorschub 7 sind.

Die Funktion ist in dieser Ausführung so gewählt, daß das Werkstück, vorliegend also die Stromdüse 1, stehend befestigt ist, während das Werkzeug bzw. der Bohrer 5 sich dreht. Dies ist beim Tiefbohren die Standardausführung für rotations- und asymmetrische Werkstücke. Über den Vorschub 7 wird der vom Antrieb 4 in Drehung versetzte Bohrer 5 langsam in die Stromdüse 1 geschoben und erzeugt dabei die Innenöffnung 2. Nicht gezeigt sind die beim Tiefbohren üblichen Vorrichtungen zum Spülen der Bohrerspitze und zum Abführen der Späne. Da ein rotationssymmetrisches Werkstück bearbeitet wird, ist auch der Einsatz von Tiefbohrmaschinen möglich, bei denen sich das Werkzeug, also der Bohrer 5 und das Werkstück bzw. die Stromdüse 1 gegenläufig drehen. Möglich ist ebenso die Arbeitsweise, bei der ein drehendes Werkstück vorgesehen ist, während das Werkzeug steht.

Zu erkennen ist jeweils, daß beim Tiefbohren relativ lange Bohrer 5 zum Einsatz kommen, die dank ihrer speziellen Ausgestaltung und der hohen Drehzahlen eine Herstellung kleiner Späne ermöglichen, die durch die Ölspülung nach hinten weggeführt werden, so daß ein kontinuierlicher Betrieb erreicht ist und die Innenöffnung in einem Arbeitsgang in der gewünscht hohen Qualität hergestellt wird.

## Patentansprüche

1. Verfahren zur Herstellung einer Stromdüse (1) für Schweißoder Schneidbrenner mit einer oder mehreren Innenöffnungen (2) zur Führung und Kontaktierung eines oder mehrerer Schweißdrähte, **dadurch gekennzeichnet, daß** die wenigstens eine Innenöffnung (2) durch Tiefbohren in stabförmiges Vormaterial hergestellt ist.

2. Verfahren nach Anspruch 1, **dadurch gekennzeichnet, daß** das Vormaterial Vollmaterial oder Rohrmaterial ist.

3. Verfahren nach Anspruch 1 oder Anspruch 2, **dadurch gekennzeichnet, daß** als Vormaterial nicht oder schwer ziehfähiges Material verwendet wird.

4. Verfahren nach einem der Ansprüche, **dadurch gekennzeichnet, dass** das Vormaterial eine Metallstange ist.

5. Verfahren nach einem der vorhergehenden Ansprüche, **dadurch gekennzeichnet, dass** das Vormaterial in eine Tiefbohrmaschine (3) eingespannt ist.

## Claims

1. Method of producing a current nozzle (1) for welding or cutting torches with one or more internal openings (2) for the guidance and contacting of one or more welding wires, **characterised in that** the at least one internal opening (2) is produced by deep-drilling in bar-shaped starting material.

2. Method according to claim 1, **characterised in that** the starting material is solid material or tube material.

3. Method according to claim 1 or claim 2, **characterised in that** material which is not capable of being drawn or which is difficult to draw is used as starting material.

4. Method according to one of the claims, **characterised in that** the starting material is a metal rod.

5. Method according to one of the preceding claims, **characterised in that** the starting material is clamped in a deep-drilling machine (3).

## Revendications

1. Procédé pour fabriquer une buse d'alimentation en courant (1) pour un chalumeau à souder ou un chalumeau à découper, comportant une ou plusieurs ouvertures intérieures (2) pour le guidage d'un ou de plusieurs fils à souder et l'établissement du contact avec de tels fils, **caractérisé en ce que** la au moins une ouverture intérieure (2) est formée par perçage profond dans un matériau de départ en forme de barre.

2. Procédé selon la revendication 1, **caractérisé en ce que** le matériau de départ est un matériau massif ou un matériau tubulaire.

3. Procédé selon la revendication 1 ou la revendication 2, **caractérisé en ce qu'**on utilise comme matériau de départ un matériau non ou difficilement apte à être étiré.

4. Procédé selon l'une des revendications précédentes, **caractérisé en ce que** le matériau de base est une barre métallique.

5. Procédé selon l'une des revendications précédentes, **caractérisé en ce que** le matériau de base est serré dans une machine de perçage profond (3).
